# FASCICULE DE BREVET EUROPEEN

(11) **EP 3 283 212 B1**
(45) Date de publication et mention de la délivrance du brevet: **12.06.2019**
(21) Numéro de dépôt: 16731204.0
(22) Date de dépôt: 14.04.2016
(51) Int. Cl.: B01J 19/00

(54) **DISPOSITIF DE SYNTHÈSE D'UN RADIO-TRACEUR, INSTALLATION COMPORTANT UN TEL DISPOSITIF ET PROCÉDÉ D'OBTENTION D'UN RADIO-TRACEUR AU MOYEN D'UN TEL DISPOSITIF**
VORRICHTUNG ZUR HERSTELLUNG EINES RADIONUKLIDS, ANLAGE MIT SOLCH EINER VORRICHTUNG UND VERFAHREN ZUR HERSTELLUNG EINES RADIONUKLIDS ANHAND SOLCH EINER VORRICHTUNG
DEVICE FOR THE SYNTHESIS OF A RADIOTRACER, FACILITY COMPRISING SUCH A DEVICE, AND METHOD FOR PRODUCING A RADIOTRACER BY MEANS OF SUCH A DEVICE

(30) Priorité: 16.04.2015 FR 1553402
(43) Date de publication de la demande: 21.02.2018
(73) Titulaire: P M B, 13790 Peynier (FR)
(72) Inventeur: TANGUY, Laurent, 13100 Aix En Provence (FR); CORNEILLE, Jérôme, 13080 Luynes (FR); LOUBATON, Bertrand, 92330 Sceaux (FR); DELMAS, Marc, 13320 Bouc-Bel-Air (FR); PEREZ DELAUME, Alain, 83136 FORCALQUEIRET (FR)
(74) Mandataire: Santarelli
(86) Numéro de dépôt international: PCT/FR2016/050872
(87) Numéro de publication internationale: WO 2016/166486

(56) Documents cités:
- WO-A1-2013/079578
- US-A1- 2013 020 727

## Description

La présente demande concerne un dispositif de synthèse d'un radio-traceur, une installation comportant un tel dispositif ainsi qu'un procédé d'obtention d'un radio-traceur au moyen d'un tel dispositif.

L'imagerie moléculaire clinique, et plus spécialement la Tomographie par Emission de Positons (TEP), prend une place croissante en médecine.

Elle contribue notamment à définir de manière personnalisée les traitements les mieux adaptés pour chaque patient et à en évaluer l'efficacité thérapeutique.

Cependant, le potentiel de cette technologie, en particulier avec les nombreux traceurs marqués au fluor-18 (¹⁸F) et au carbone-11 (¹¹C), n'est pas actuellement pleinement exploité en clinique et en recherche à cause des contraintes techniques, logistiques, organisationnelles et économiques, liées à la très courte demi-vie de ces radio-isotopes qui sont par exemple d'environ 110 minutes pour ¹⁸F et de 20 minutes pour ¹¹C.

D'autres difficultés sont également liées à la complexité réglementaire de leur mise en oeuvre.

Leur accès est donc actuellement très limité.

Un des objectifs de la présente demande est de proposer un système intégré de production de radio-traceurs « à la demande » pour l'imagerie moléculaire (TEP), permettant d'élargir le potentiel clinique de l'imagerie moléculaire en facilitant son accès à des centres de recherche précliniques et cliniques, et aux hôpitaux.

L'objet de la présente demande est destiné à une installation *in situ* sans contrainte majeure d'irradiation au sein même des centres de recherche et hôpitaux concernés. L'utilisation de radio-isotopes à très courte demi-vie, comme par exemple le carbone-11 (¹¹C), permet ainsi d'accéder à une très large gamme de bio-marqueurs jusqu'alors réservés à quelques centres mondiaux.

L'objet de la présente demande vise ainsi à améliorer au moins en partie les inconvénients précités.

A cet effet, est proposé selon un premier aspect, un dispositif de synthèse d'un radio-traceur à partir d'un radio-isotope caractérisé en ce qu'il comporte :
- Une enceinte confinée universelle, comportant une platine interne de connectique, par exemple agencée dans une paroi de l'enceinte, et dans laquelle est ménagée une trappe d'accès configurée pour y insérer une cassette de synthèse spécifique du radio-traceur et l'en retirer,
- La cassette de synthèse du radio-traceur, qui comporte des réactifs et un module de synthèse, le module de synthèse comportant une chambre de réaction et étant configuré pour recevoir les réactifs et le radio-isotope pour synthétiser le radio-traceur, le module de synthèse étant fluidiquement relié à une entrée de la cassette configurée pour acheminer le radio-isotope dans la chambre de réaction et à une sortie de la cassette configurée pour délivrer le radio-traceur hors de la cassette,
- La platine interne de connectique, comportant au moins une entrée, configurée pour raccorder l'entrée de la cassette à une arrivée du radio-isotope, et une sortie, configurée pour être raccordée à la sortie de la cassette et extraire le radio-traceur hors de l'enceinte.

L'entrée et la sortie de la platine de connectique forment ainsi une arrivée de radio-isotope et une sortie de radio-traceur entre un extérieur de l'enceinte et un intérieur de l'enceinte, et même de la cassette.

En d'autres termes, la platine interne de connectique comporte au moins une entrée, configurée pour être raccordée d'une part à une arrivée du radio-isotope et d'autre part à l'entrée de la cassette, et une sortie, configurée pour être raccordée d'une part à une seringue à remplir avec le radio-traceur et d'autre part à la sortie de la cassette.

Ceci revient à dire que la platine interne de connectique comporte un connecteur dit « d'entrée », et un connecteur dit « de sortie », avec le connecteur d'entrée qui est configuré pour relier l'entrée de la cassette à une arrivée du radio-isotope et le connecteur de sortie qui est configuré pour relier la sortie de la cassette à un élément d'extraction du radio-traceur, comme par exemple une seringue.

Ceci implique que ces connections sont en outre possibles alors que la cassette demeure dans l'enceinte.

Ainsi, en d'autres termes, la platine interne de connectique permet une connexion entre la cassette, située à l'intérieur de l'enceinte, et un extérieur de l'enceinte à travers une paroi de l'enceinte.

En outre, le fait que l'enceinte comporte la platine interne de connectique, voire qu'une paroi de l'enceinte la comporte, signifie que la platine interne de connectique comporte au moins une partie qui constitue une partie de la paroi de l'enceinte.

Par ailleurs, une seringue désigne ici un dispositif permettant ensuite d'administrer le radio-traceur à un patient.

Les radio-isotopes considérés ici sont de préférence liquides ou gazeux.

Ainsi, un tel dispositif permet de synthétiser différents radio-traceurs grâce à une enceinte d'architecture universelle dans laquelle est disposée une cassette spécifique au radio-traceur à synthétiser.

Cette enceinte, prise sans la cassette, constitue une simple boîte destinée à contenir une cassette lorsqu'une synthèse est à réaliser. Il est intéressant de noter qu'il n'est pas nécessaire que l'enceinte soit blindée.

A titre indicatif, une telle enceinte mesure de l'ordre du demi mètre selon chacune des trois dimensions, c'est-à-dire en hauteur, en largeur ou encore en longueur ; de préférence au maximum 0,50 m.

Selon un exemple de réalisation, le dispositif comporte un tuyau d'aspiration de gaz, configuré pour pomper un gaz contenu dans l'enceinte, de préférence en partie supérieure du dispositif. Par exemple, le tuyau d'aspiration de gaz est fluidiquement relié à la platine de connectique du dispositif. Au moins une partie, voire tout le tuyau d'aspiration de gaz, est de préférence située à l'intérieur de l'enceinte.

Selon un autre exemple de réalisation, le dispositif comporte un tuyau d'injection de gaz propre, configuré pour amener du gaz propre dans l'enceinte en partie inférieure du dispositif. Par exemple, le tuyau d'injection de gaz propre est fluidiquement relié à la platine de connectique du dispositif. L'injection de gaz propre peut résulter simplement de l'aspiration de gaz précitée. Au moins une partie, voire tout le tuyau d'injection de gaz propre, est possiblement située à l'intérieur de l'enceinte.

Selon une disposition intéressante, la cassette comporte un module de prétraitement du radio-isotope.

Selon une autre disposition intéressante, le dispositif comporte un module de purification du radio-traceur. Par exemple, le module de purification du radio-traceur comporte une colonne HPLC (acronyme de High Performance Liquid Chromatography). Dans un exemple de réalisation, le module de purification du radio-traceur est situé à l'intérieur de l'enceinte. Un tel module est par exemple relié à la cassette par l'intermédiaire de la platine interne de connectique. Un tel module est par exemple monté en série après la cassette.

Selon un exemple de réalisation, le dispositif comporte un système externe de gestion de la qualité d'air (ou de gaz) dans l'enceinte utilisant éventuellement les tuyaux précités.

Le système de gestion de la qualité d'air dans l'enceinte comporte possiblement une pompe configurée pour créer une dépression dans l'enceinte et un capteur de pression configuré pour contrôler la dépression.

Le système de gestion de la qualité d'air dans l'enceinte comporte optionnellement un contrôleur de débit en amont de l'enceinte et un contrôleur de débit en aval de l'enceinte configurés pour contrôler à la fois un débit de gaz qui traverse l'enceinte et une pression dans l'enceinte.

Le système de gestion d'air dans l'enceinte comporte possiblement aussi un filtre, par exemple de type H14, en amont de l'enceinte et potentiellement en aval pour éviter la propagation de la population, configuré pour assurer une pureté d'air de classe A.

Le système de gestion d'air dans l'enceinte comporte éventuellement une boucle de contrôle indépendante configurée pour réaliser un contrôle particulaire et éventuellement radiologique de l'air dans l'enceinte. La boucle de contrôle peut comporter un compteur particulaire configuré pour réaliser un pompage de la boucle.

Est également proposée, selon un autre aspect, une installation de synthèse d'au moins un radio-traceur comportant un dispositif de synthèse tel que décrit précédemment et une salle confinée comportant :
- Une zone de stockage d'au moins deux enceintes de dispositifs de synthèse tels que décrits précédemment, vides et identiques,
- Au moins une fenêtre (de préférence un sas) de communication entre un intérieur et un extérieur de la salle configurée pour qu'un praticien fournisse au moins une cassette de synthèse du radio-traceur du dispositif de synthèse,
- Un robot de manipulation configuré pour au moins prélever l'une des enceintes et la cassette de synthèse, les amener sur un poste de synthèse et les associer pour former le dispositif de synthèse,
- Le poste de synthèse, fixe dans la salle et configuré pour recevoir le dispositif de synthèse, comportant une platine externe de connectique, configurée pour recevoir la platine interne de l'enceinte du dispositif de synthèse, comportant au moins une entrée configurée pour acheminer un radio-isotope dans la cassette de synthèse et une sortie configurée pour y raccorder une seringue à remplir avec le radio-traceur, c'est-à-dire un dispositif permettant d'administrer le radio-traceur ultérieurement, et
- Une arrivée de radio-isotope provenant d'une source située hors de la salle et connectée à l'entrée de la platine externe de connectique.

En provenance de la source, le radio-isotope circule dans un tuyau d'alimentation, en pratique un tuyau de petit diamètre ou « capillaire », qui est relié de manière fixe à la platine de connectique du poste de synthèse qui est fixe dans la salle. La platine de connectique du poste de synthèse est par exemple fixe dans la salle et unique.

La source de radio-isotope peut être, comme indiqué ci-dessus, une ciblerie associée à un cyclotron, mais peut aussi, notamment être un générateur (par exemple pour le ⁶⁸Ga), ou un apport de radio-isotope généré ailleurs.

Il y a avantageusement des fenêtres différentes (ou des sas différents) pour l'introduction des cassettes et d'éventuelles seringues à remplir, et pour l'extraction des radio-traceurs, de préférence déjà contenus par des seringues.

Dans un cas particulier d'utilisation de carbone, un module intermédiaire entre la ciblerie et la platine de connectique du poste de synthèse peut exister.

Une enceinte vient être fixée sur la platine de connectique du poste de synthèse et, en fonction de la cassette introduite dans l'enceinte sélectionnée, une liaison spécifique est établie entre la platine de connectique du poste de synthèse, et par voie de conséquence avec le tuyau d'alimentation, et la cassette introduite dans l'enceinte.

Toutes les enceintes sont par exemple de constitutions identiques bien qu'en pratique il soit préférable, par précaution, que chaque enceinte soit dédiée à un radio-traceur particulier.

Il est toutefois possible d'utiliser un même radio-isotope pour synthétiser différents radio-traceurs. Dans un tel cas, on peut en variante choisir que toutes les enceintes dédiées à la formation d'un radio-traceur à partir d'un même radio-isotope soient identiques.

Selon un exemple de réalisation, l'installation de synthèse comporte un module extérieur de contrôle qualité du radio-traceur synthétisé.

Le module de contrôle qualité est par exemple fluidiquement raccordé à la sortie de la platine de connectique du poste de synthèse.

Pour des raisons réglementaires, un tel module de contrôle de qualité est en pratique implanté à l'extérieur de la salle ; pour le disposer au plus près d'une enceinte dans laquelle une synthèse vient d'être réalisée, ce poste est avantageusement disposé à l'extérieur de la salle en regard du poste de synthèse.

Selon un exemple intéressant, l'installation comporte un système de gestion d'air ambiant de la salle, par exemple pour le maintenir en Classe C.

Est aussi proposé selon encore un autre aspect, un procédé d'obtention d'un radio-traceur dans une installation telle que décrite précédemment, comportant les étapes suivantes :
- Une étape de positionnement d'une enceinte d'un dispositif de synthèse tel que décrit précédemment sur un poste de synthèse de l'installation telle que décrite précédemment par un robot de manipulation ;
- Une étape de connexion d'une platine interne de connectique de l'enceinte du dispositif avec une platine externe de connectique du poste de synthèse ;
- Une étape d'insertion d'une cassette de synthèse spécifique du radio-traceur dans l'enceinte du dispositif de synthèse par le robot, la cassette étant préalablement fournie par un praticien via une fenêtre de l'installation, formant ainsi le dispositif de synthèse de l'installation, le dispositif de synthèse comportant tout ou partie des caractéristiques précédemment décrites ;
- Une étape de fourniture d'un radio-isotope acheminé depuis une source positionnée en dehors d'une salle de l'installation jusque dans un module de synthèse de la cassette ;
- Une étape de synthèse d'un radio-traceur dans le module de synthèse de la cassette à partir du radio-isotope et de réactifs contenus dans la cassette ; et
- Une étape d'extraction du radio-traceur hors du dispositif de synthèse.

Le procédé comporte en outre éventuellement une étape de filtration stérilisante et de dilution/formulation du radio-traceur dans un produit injectable à l'homme, par exemple du sérum physiologique.

Selon un mode privilégié de mise en oeuvre, le procédé comporte en outre :
- Une étape de connexion d'une seringue, c'est-à-dire d'un dispositif permettant d'administrer le radio-traceur ultérieurement, en sortie de la platine externe de connectique du poste de synthèse, et
- Une étape de mise en seringue du radio-traceur issu du dispositif c'est-à-dire d'introduction dans le dispositif permettant d'administrer le radio-traceur ultérieurement.

Le procédé comporte aussi de manière avantageuse une étape de contrôle qualité du radio-traceur en sortie de la platine externe de connectique du poste de synthèse par un module de contrôle qualité situé à l'extérieur de la salle.

L'invention, selon un exemple de réalisation, sera bien comprise et ses avantages apparaitront mieux à la lecture de la description détaillée qui suit, donnée à titre indicatif et nullement limitatif, en référence aux dessins annexés dans lesquels :
La figure 1 montre une vue en élévation d'un dispositif de synthèse d'un radio-traceur selon un exemple de réalisation de la présente invention,
La figure 2 présente un fond d'une enceinte du dispositif de la figure 1 servant de support à différents éléments du dispositif et comportant une platine interne de connectique,
La figure 3 présente le dispositif de la figure 1 ouvert pour y insérer une cassette de synthèse d'un radio-traceur et l'en retirer et une platine externe de connectique d'un poste de synthèse d'une salle d'une installation schématisée figure 9,
La figure 4 présente une vue en coupe en perspective d'une trappe d'accès dans l'enceinte du dispositif comportant une ouverture dans l'enceinte et un bouchon,
La figure 5 présente un exemple de réalisation des éléments disposés dans le dispositif et positionnés sur le support présenté figure 2,
La figure 6 illustre une approche de la cassette en vue d'une connexion avec une platine interne de connectique du dispositif,
La figure 7 présente une première vue en coupe d'une connexion entre la cassette et la platine interne de connectique du dispositif,
La figure 8 présente une deuxième vue en coupe, selon un plan orthogonal à celui de la figure 7, illustrant les connexions entre la cassette et la platine de connectique du dispositif,
La figure 9 illustre schématiquement un exemple d'agencement d'une installation de synthèse dans laquelle peuvent être synthétisés différents radio-traceurs à l'aide d'un dispositif selon l'invention,
La figure 10 présente une vue intérieure en perspective d'un dispositif selon un autre exemple réalisation, et
La figure 11 présente un exemple de réalisation d'une cassette.

Les éléments identiques représentés sur les figures précitées sont identifiés par des références numériques identiques.

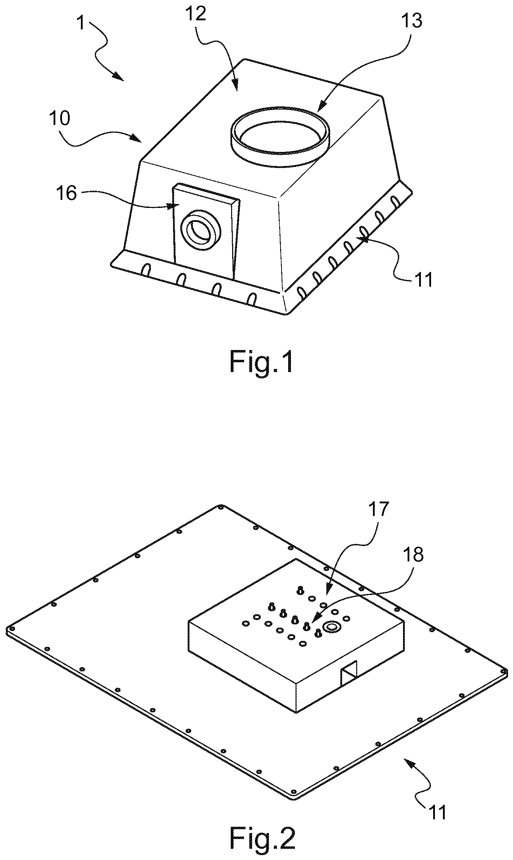

En référence à la figure 1, un dispositif de synthèse d'un radio-traceur 1 selon un exemple de réalisation de la présente invention comporte une enceinte 10, ou boîte, dans laquelle sont disposés différents éléments permettant la synthèse du radio-traceur.

L'enceinte 10 a ici une forme globalement parallélépipédique et définit un espace hermétique et confiné, et est par exemple (mais pas nécessairement) blindée. L'enceinte 10 mesure par exemple au plus 50 cm selon chacune des trois dimensions, c'est-à-dire en hauteur, en largeur ou encore en longueur. Elle pourrait également être cubique ou cylindrique mais une forme parallélépipédique facilite le stockage d'une pluralité de telles enceintes dans une zone de stockage ou d'attente.

L'enceinte 10 est ici formée d'un support 11, formant par exemple un fond de l'enceinte, et d'un capot 12.

Le support 11 sert par exemple ici à positionner au moins les différents éléments permettant la synthèse du radio-traceur.

Le capot 12, comportant ici une paroi latérale et une face supérieure sensiblement opposée au support 11, est solidarisé au support 11, par exemple en y étant vissé. Optionnellement, un joint (par exemple torique), positionné sur un pourtour du support 11 de sorte à être comprimé lors du vissage du capot sur le support, permet de renforcer cette étanchéité.

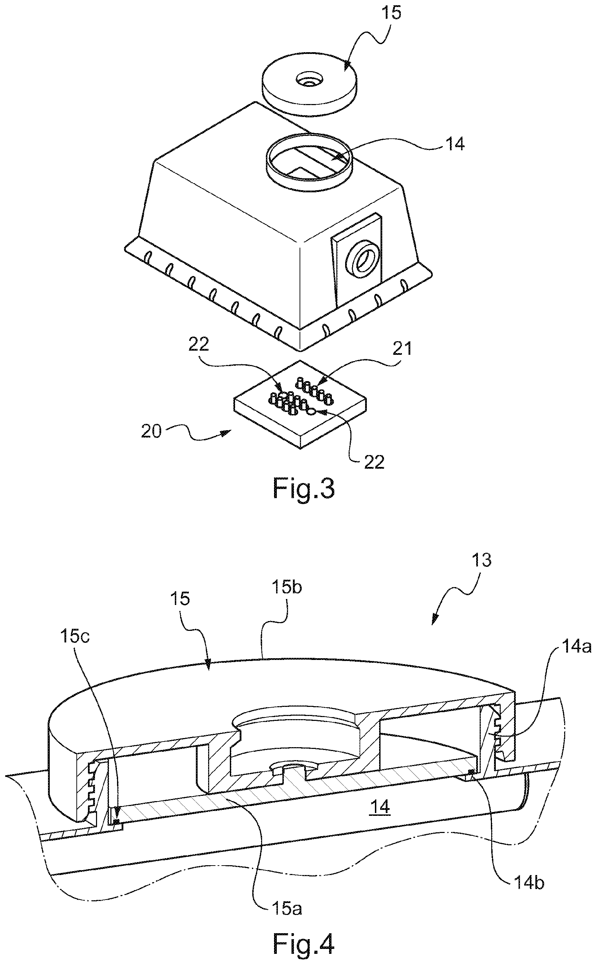

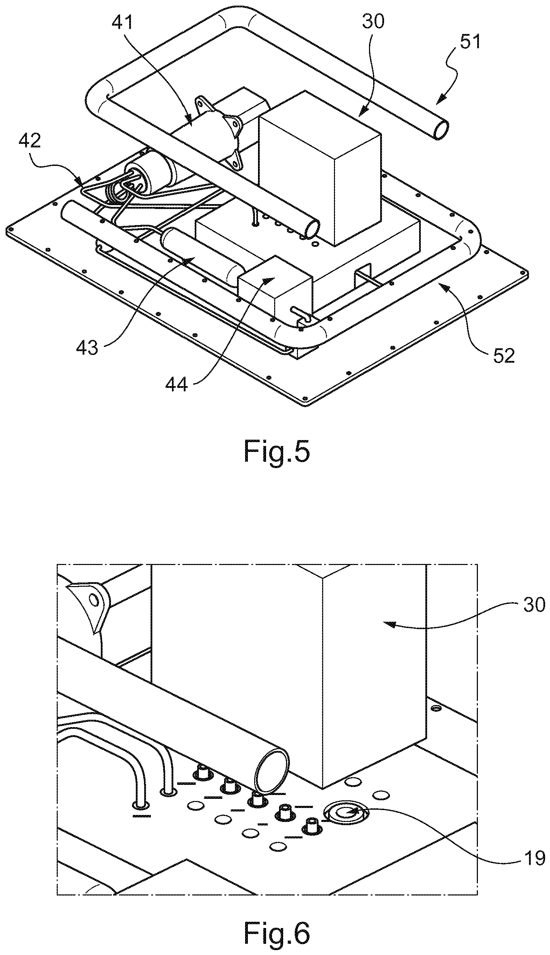

L'enceinte 10 comporte en outre ici une trappe d'accès 13, formée par une ouverture 14 et un bouchon 15 permettant d'obturer ou dégager l'ouverture 14 (visibles notamment figure 3). La trappe 13 est configurée pour insérer une cassette de synthèse d'un radio-traceur 30 (visible figure 5) dans l'enceinte 10 et l'en retirer.

Dans le présent exemple de réalisation, la trappe d'accès 13 est ménagée dans la face supérieure du capot 12 de l'enceinte 10. Cependant, elle pourrait bien entendu être ménagée dans la paroi latérale.

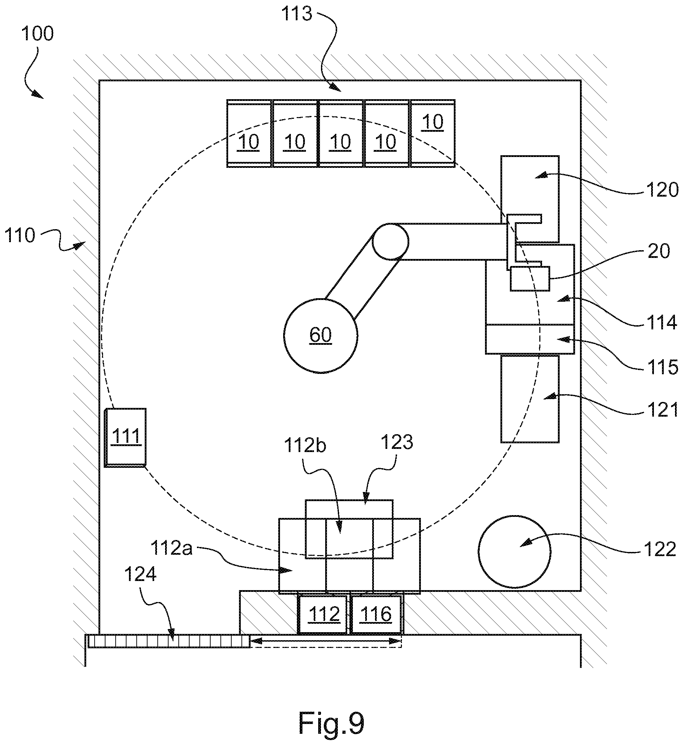

L'enceinte 10 comporte aussi une interface de manutention 16 pour un robot (illustré figure 9) configuré pour déplacer le dispositif de synthèse 1 dans une salle de synthèse 110 (schématisée figure 9).

L'interface de manutention 16 est par exemple ici ménagée dans la paroi latérale du capot 12. Il s'agit par exemple d'une poignée, d'une empreinte en relief ou de tout type de prise à laquelle peut s'ancrer un bras du robot pour attraper, maintenir et déplacer le dispositif.

Les matériaux mis en oeuvre pour former l'enceinte 10 sont par exemple de l'acier inoxydable (type 316 ou 316L), en particulier pour le support 11 par exemple, et/ou du plastique, par exemple pour le capot 12.

La figure 2 présente le support 11, nu, c'est-à-dire ici dépourvu de tout élément, et en particulier des différents éléments permettant la synthèse du radio-traceur.

Le support 11 est par exemple ici formé d'une plaque plane de forme sensiblement rectangulaire. En périphérie, se trouvent des trous permettant un vissage du capot 12.

L'enceinte 10, et en particulier ici le support 11, comporte principalement une platine interne de connectique 17.

Dans cet exemple de réalisation, la platine interne de connectique fait donc partie d'une partie de l'enceinte, voire même ici d'une partie de la paroi de l'enceinte, en l'occurrence du support 11.

La platine interne de connectique 17 est ici de forme sensiblement parallélépipédique. Elle comporte de nombreux connecteurs 18 détaillés ci-après. La platine interne de connectique 17 du support 11 est en particulier configurée pour être connectée à une platine externe de connectique 20 (visible figure 3) qui est fixée à un poste de synthèse 114 d'une salle 110 d'une installation de synthèse 100 (par exemple schématisée figure 9).

Ces connecteurs 18 forment des entrées et sorties de l'enceinte du dispositif de synthèse 1. Ils sont ici alignés en différentes rangées, ici principalement trois rangées. Par exemple, un connecteur permet un acheminement d'un radio-isotope jusque dans la cassette ; un autre connecteur permet une extraction du radio-traceur, synthétisé dans la cassette, hors de l'enceinte, voire hors du dispositif de synthèse. Pour cela, ces connecteurs sont configurés pour être connectés, d'une part à la cassette 30, et d'autre part à la platine externe de connectique 20 susmentionnée. Une connexion entre la cassette 30 et l'enceinte 10 est par exemple assurée par des connecteurs de type TEGO D1000.

Ainsi, en d'autres termes, la platine interne de connectique 17 permet par exemple une connexion entre la cassette 30, située à l'intérieur de l'enceinte, et un extérieur de l'enceinte à travers une paroi de l'enceinte.

La figure 3 illustre une ouverture de la trappe d'accès 13, formée de l'ouverture 14 et du bouchon 15, ainsi qu'une approche (suivant les flèches) de l'enceinte 10 du dispositif de synthèse 1 en vue d'être positionnée et connectée à la platine externe de connectique 20 du poste de synthèse 114.

La platine externe de connectique 20 a par exemple une forme similaire à celle de la platine interne de connectique 17, soit ici une forme sensiblement parallélépipédique. Bien entendu, la platine externe 20 et la platine interne de connectique 17 pourraient avoir toutes autres formes, par exemple une forme cylindrique ou carrée ou quelconque. La platine externe de connectique 20 comporte plusieurs embouts 21. Les embouts 21 sont ici alignés en différentes rangées, ici trois rangées, à l'instar des connecteurs 18 de la platine interne de connectique 17 de l'enceinte 10. Ils dépassent ici d'une surface supérieure de la platine externe 20.

Outre les embouts 21, la platine externe de connectique 20 comporte deux trous 22 traversant une épaisseur de la platine externe 20 configurés pour former un passage de liaison d'un circuit fluidique de l'enceinte, par exemple en vue du contrôle d'air ambiant dans l'enceinte 10.

La figure 4 détaille la trappe d'accès 13 selon l'exemple de réalisation de la figure 3.

La trappe d'accès 13 est par exemple ouverte ou fermée par un robot de manipulation 60 (représenté figure 9), ou par un actionneur interne à l'enceinte 10 ou bien encore par un actionneur externe mutualisé pour différentes enceintes.

La trappe d'accès est par exemple positionnée au-dessus de la platine interne de connectique 17, ou de manière générale en vis-à-vis de celle-ci, de sorte à faciliter un positionnement de la cassette dans l'enceinte, par simple translation verticale, sur la platine interne de connectique 17.

L'ouverture 14, qui a ici à titre purement illustratif une forme circulaire, comporte un col 14a qui comporte ici un filetage, ici sur un pourtour extérieur du col.

De plus, l'ouverture 14 est ici munie d'une collerette 14b configurée pour servir de butée à une plateforme 15a du bouchon 15.

Le bouchon 15 comporte, outre la plateforme 15a, une cage 15b.

La plateforme 15a et la cage 15b sont montées à pivotement l'une à l'autre via une paroi supérieure de la cage.

La cage 15b comporte une paroi latérale, ici de forme cylindrique circulaire, qui comporte ici un filetage, ici sur un pourtour intérieur de la paroi latérale pour pouvoir coopérer avec le filetage du col 14a.

Le bouchon 15 est ainsi configuré pour que, lorsque la cage est vissée sur le col, la plateforme qui entre en contact avec la collerette reste fixe par rapport à la collerette alors qu'elle tourne par rapport à la cage.

Dans le présent exemple de réalisation, le bouchon 15, et en particulier ici la plateforme 15a, comporte un joint 15c, par exemple disposé selon un contour de la plateforme 15. Ainsi, lorsque la plateforme est en contact avec la collerette 14b, le joint 15c est pris entre la plateforme et la collerette. Au fur et à mesure du vissage du bouchon, le joint est donc comprimé ce qui contribue à garantir une étanchéité de l'enceinte au niveau de la trappe d'accès 13.

Selon une option de réalisation non représentée, le bouchon 15 est muni d'au moins un élément de rappel, par exemple un ressort hélicoïdal ou plusieurs, attaché sous le bouchon, par exemple ici à une face de la plateforme orientée vers l'intérieur de l'enceinte lorsque le bouchon 15 ferme l'ouverture 14. Ainsi, lorsqu'une cassette est positionnée dans l'enceinte et que l'enceinte est fermée, l'élément de rappel appui sur la cassette pour améliorer un maintien en position de la cassette dans l'enceinte, en particulier sur la platine interne de connectique 17.

D'autres modes de réalisation de la trappe 13 sont bien entendu envisageables comme par exemple une fenêtre coulissante ou une trappe pivotante ou autres.

Selon encore une autre option, l'enceinte comporte un vérin configuré pour assurer une jonction entre une cassette et la platine interne de connectique 17.

A défaut, le robot de manipulation 60 (représenté figure 9) assure lui-même le positionnement et la connexion d'une cassette à la platine interne de connectique 17.

La figure 5 illustre maintenant les différents éléments disposés dans l'enceinte permettant la synthèse d'un radio-traceur.

Le dispositif de synthèse 1 comporte principalement deux circuits : un circuit fluidique de synthèse chimique et un circuit d'aération.

Dans l'exemple représenté, le circuit d'aération comporte un tuyau d'aspiration de gaz 51, configuré pour pomper du gaz contenu en partie supérieure de l'enceinte du dispositif de synthèse 1, et un tuyau d'injection de gaz propre 52 configuré pour amener du gaz propre en partie inférieure de l'enceinte du dispositif de synthèse 1.

Les tuyaux d'aspiration 51 et d'injection 52 sont par exemple ici en forme de U bouchés à leurs deux extrémités et fonctionnent par exemple comme des tuyaux de douches.

Le tuyau d'injection 52 comporte par exemple des trous de soufflage orientés vers le fond du dispositif pour mettre en suspension d'éventuels dépôts de particules.

Le gaz propre injecté est par exemple de l'azote (N) ou de l'argon (Ar), mais tout autre gaz inerte pourrait convenir.

Le tuyau d'aspiration 51 et le tuyau d'injection 52 sont reliés à la platine interne de connectique 17 par des flexibles. Ils sont ainsi connectés, au travers de la platine externe de connectique 20, à des pompes situées hors de l'enceinte, en amont et/ou en aval selon un sens de circulation des gaz.

Il peut suffire d'une pompe pour aspirer l'air contenu dans l'enceinte et, par conséquence, aspirer du gaz propre.

Une pompe permet par exemple de créer une dépression contrôlée dans l'enceinte. Cette dépression est par exemple vérifiée par un capteur de pression. L'utilisation de deux éventuels contrôleurs de débit, un en amont et un en aval, rend possible de contrôler à la fois le débit d'air qui traverse l'enceinte et la pression dans l'enceinte.

L'utilisation d'un éventuel filtre, par exemple de type H14, en entrée assure une pureté d'air suffisante pour instaurer un air de classe A. De manière avantageuse, une boucle supplémentaire indépendante permet le contrôle particulaire et éventuellement radiologique de l'air. Le pompage de cette boucle est par exemple assuré par le compteur particulaire lui-même.

Dans l'exemple représenté, le circuit fluidique comporte principalement en série une vanne 41, des flexibles de circulation de fluide 42, un module de purification du radio-traceur 43, comportant par exemple une colonne HPLC, et un détecteur blindé 44.

La vanne 41 est ici une vanne d'injection permettant de découpler les circuits basse pression (la cassette par exemple) et haute pression (la colonne HPLC par exemple) ; il s'agit par exemple d'une vanne Rhéodyne (A) type 6.2 (6 ports 2 positions) avec une boucle d'injection (d'un volume de moins d'un ml en pratique). Elle est par exemple une vanne motorisée électriquement (24V (volts) en courant continu (CC), 8 fils).

La vanne 41 est reliée à la platine interne 17 via des flexibles 42.

Les flexibles 42 comportent en outre optionnellement par exemple deux clapets anti-retour et/ou une vanne 3-voies (3V).

Le détecteur 44 est configuré pour détecter un éventuel pic de radioactivité issu de la purification. Il pilote aussi par exemple l'actionnement d'une vanne 3V juste après pour permettre l'extraction du pic représentant le produit purifié.

Les déchets sont sortis de l'enceinte par une des connectiques prévues sur chacune des platines.

Le dispositif de synthèse 1 comporte aussi la cassette de synthèse 30, qui est une unité consommable, c'est-à-dire à usage unique. La cassette 30, lorsqu'elle est positionnée dans l'enceinte 10, est montée en série dans le circuit fluidique, notamment grâce à la platine interne de connectique 17.

La figure 6 montre plus en détails le positionnement de la cassette 30 sur la platine interne de connectique 17 en vue de son raccord fluidique avec la platine externe de connectique 20.

En particulier, la platine externe 20 et la platine interne de connectique 17 sont configurées pour permettre la connexion d'une seringue (non représentée). Un orifice de la platine interne de connectique 17 dédié à cet effet est par exemple entouré d'un joint 19, par exemple un joint torique, permettant de renforcer une étanchéité entre la cassette 30 et la platine interne de connectique 17.

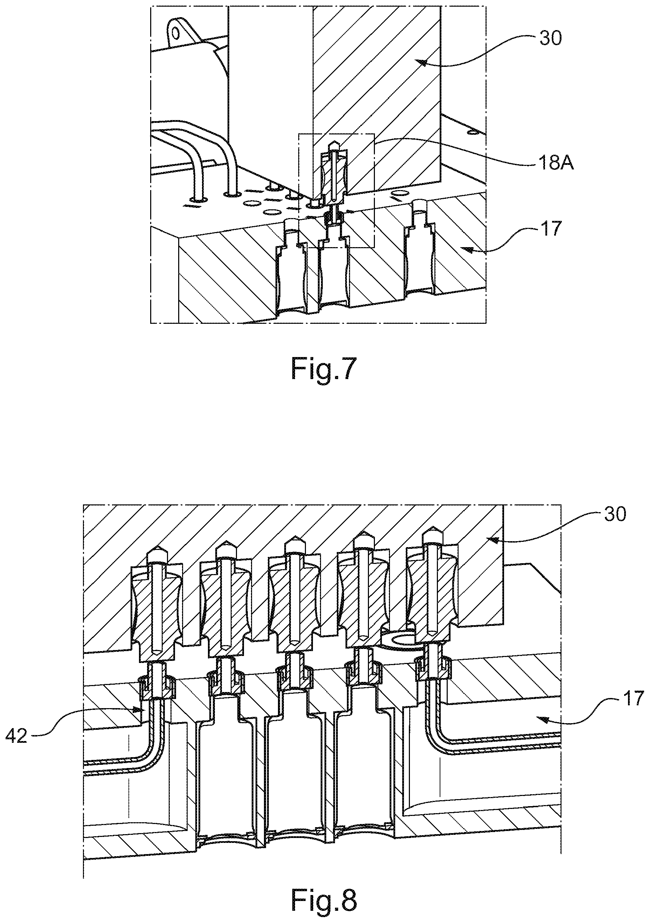

Selon d'autres vues, les figures 7 et 8 illustrent une connexion entre la cassette 30 et la platine interne de connectique 17 grâce à une connectique dite mère située dans la cassette 30 et une connectique dite fille située dans la platine interne de connectique 17. La combinaison de ces connectiques est, à la figure 7, désignée sous la référence 18B.

Ainsi par exemple, le radio-isotope est injecté par l'intermédiaire de la platine externe de connectique 20 et la platine interne 17 dans la cassette 30. Le radio-traceur obtenu en sortie de la cassette passe dans des flexibles 42, puis dans la colonne HPLC 43 pour purification puis dans le détecteur 44. En sortie du détecteur 44, il traverse une vanne à l'issue de laquelle une partie retourne dans la cassette 30 pour d'éventuelles étapes finales (dont par exemple une filtration stérilisante et une éventuelle formulation) puis est mis en seringue ; l'autre partie va vers la poubelle par l'intermédiaire des platines.

Ainsi, un tel dispositif de synthèse permet de synthétiser différents radio-traceurs grâce à une enceinte d'architecture universelle dans laquelle est disposée une cassette spécifique au radio-traceur à synthétiser, à partir du radio-isotope injecté en entrée.

La figure 9 présente un exemple d'agencement d'une installation de synthèse d'au moins un radio-pharmaceutique selon l'invention, notée 100 dans son ensemble.

L'installation 100 comporte une salle 110 étanche dans laquelle est disposé principalement un ensemble d'enceintes 10 de dispositifs de synthèse 1 tels que décrits précédemment en un lieu de stockage 113 et un robot de manipulation 60, sensiblement positionné ici au milieu de la salle 110.

Les avantages de l'utilisation d'un robot sont liés à l'application de diversification et aux dispositifs stériles ou aux procédures d'assurance qualité. En outre, le personnel ayant moins besoin d'être présent, il est moins exposé aux rayonnements ionisants ; cela permet de ne pas avoir à nécessairement blinder chaque enceinte, ce qui permet des réductions de coût.

En effet, auparavant, un robot n'était pas nécessaire puisqu'il y avait toujours un même radio-traceur, et par conséquent, une ligne fixe suffisait pour les réactions.

Du fait de la pluralité de traceurs, soit les dispositifs restent au même endroit et les fluides y sont acheminés, soit les dispositifs sont eux-mêmes déplacés (solution retenue dans le présent exemple de réalisation) en fonction d'un cheminement préétabli des fluides (c'est-à-dire principalement du radio-isotope et de la cassette).

Pour cela, la robotisation concerne ici un robot 60 configuré pour déplacer les enceintes 10 de dispositifs de synthèse ainsi que les autres éléments concernés dans la salle 110 de manière automatique.

Le robot 60 est par exemple un bras robotisé 6-axes.

Le robot 60 est donc ici configuré pour disposer une des enceintes 10 à un endroit prédéterminé pour la raccorder fluidiquement à une source externe d'au moins un radio-isotope, par exemple une ciblerie située dans une salle, par exemple adjacente, dans laquelle est également disposé un cyclotron, permettant d'obtenir le radio-isotope à utiliser.

Pour cela, le robot 60 prend une enceinte 10 de son lieu de stockage 113 et la positionne sur le poste de synthèse 114.

C'est le poste de synthèse 114 qui comporte la platine externe de connectique 20 décrite précédemment. Le poste de synthèse 114, comme la platine externe de connectique 20, sont fixes dans la salle 110.

La platine externe de connectique 20 est reliée par plusieurs tuyaux, ou capillaires, à différentes sources de radio-isotopes situées hors de la salle 110. Il peut s'agir de cibleries, mais aussi de générateurs (notamment pour le ⁶⁸Ga) voire d'une zone d'alimentation où sont apportés des radio-isotopes générés à distance de la salle. Elle comporte par exemple un tuyau par radio-isotope, et par conséquent une entrée par tuyau d'amenée d'un radio-isotope donné.

La connexion entre l'enceinte 10 sélectionnée et le poste de synthèse 114, plus précisément la platine externe de connectique 20, est assurée par, soit une motorisation (et une vis sans fin par exemple), soit un autre mécanisme de préhension, par exemple du type de ceux conçus et réalisés par la société Staubli.

En outre, le robot 60 est configuré pour, d'une part insérer une cassette de synthèse 30 dans l'enceinte 10 et, d'autre part y adjoindre une seringue.

Pour cela, la cassette 30 est fournie par un praticien, présent hors de la salle 110, à travers une fenêtre d'accès 112.

Pour insérer la cassette 30 dans l'enceinte 10, le robot 60 récupère la cassette 30 à la fenêtre d'accès 112 (il s'agit de préférence d'un sas), dévisse le bouchon 15 de l'enceinte 10, insère et positionne la cassette 30 en la passant à travers l'ouverture 14 et revisse le bouchon 15 sur l'ouverture 14.

Après utilisation, c'est-à-dire après la synthèse du radio-traceur à partir du radio-isotope approprié, le robot dévisse le bouchon, retire la cassette et la jette dans une poubelle de recyclage des déchets solides 111.

Le robot 60 est également, par exemple, configuré pour adjoindre une seringue (éventuellement munie d'un blindage), par exemple aussi fournie par le praticien par la même fenêtre d'accès 112.

La fenêtre d'accès 112 permet ici à la fois l'entrée dans la salle de seringues mais aussi de consommables neufs (cassettes) ; les zones de réception de ces seringues et de ces consommables peuvent être différenciées.

Une fois le radio-isotope et la cassette dans l'enceinte positionnée sur le poste de synthèse, un radio-traceur est généré et mis dans la seringue au niveau d'un poste de mise en seringue 115 relié à la platine externe de connectique 20.

La connexion entre la seringue et la cassette se fait au moins par la platine interne de connectique 17, voire par la platine externe de connectique 20 puis la platine interne de connectique 17. Comme évoqué précédemment, l'étanchéité de l'enceinte est avantageusement assurée par un joint torique 19, par exemple placé autour d'un connecteur TEGO D1000.

Le mouvement de connexion/déconnexion est par exemple assuré par un automate de mise en seringue qui utilise un mouvement de translation verticale, notamment parce que ceci permet d'éviter plus simplement une éventuelle présence de bulle d'air dans la seringue.

La qualité du radio-traceur contenu de la seringue est contrôlée et, sous réserve que le contrôle soit positif, c'est-à-dire conforme aux attentes et spécifications, la seringue est restituée au praticien par le robot 60, en dehors de la salle, via une fenêtre de sortie 116 (de préférence un sas) permettant d'accéder à une zone en pratique distincte des zones 112a et 112b.

Les fenêtres d'accès et de sortie sont ici adjacentes mais peuvent, en variante, être situées à deux extrémités de la salle lorsque, par exemple, le robot a un domaine d'action étroit et allongé.

De manière générale, une partie du radio-traceur issu du dispositif de synthèse 1 va dans la seringue et une autre partie va au contrôle qualité.

Le prélèvement pour le contrôle qualité peut être assuré, en pratique à l'extérieur de la salle, de plusieurs façons, par exemple :
- Par l'automate de mise en seringue en remplissant une seringue d'échantillonnage. Cette seringue d'échantillonnage peut ensuite soit être donnée à un utilisateur qui l'utilise pour réaliser différents contrôles qualité, soit est automatiquement injectée à un automate réalisant l'ensemble des contrôles qualités.
- Par utilisation d'une ligne de transfert (par exemple de type capillaire) entre un module de contrôle qualité et l'enceinte permettant un transfert de fluide entre eux. Le module de contrôle qualité peut alors éventuellement comporter l'automate de contrôle qualité précité.

Le module de contrôle qualité est par exemple un module indépendant à l'extérieur de la pièce 110 qui vaut pour tous les radio-traceurs.

Une telle installation permet ainsi de proposer une solution compacte, légère, autonome et fiable (sans danger ; par exemple en toutes circonstances, le robot agit en mode sécurisé (coupe de courant, fausses manipulations etc.)) car le praticien apporte son produit (la cassette et en pratique la seringue lorsqu'elle est utile) et tout fonctionne de manière automatisée.

La salle peut en outre comporter un coffret de fluides 120, un module 121 ici appelé CH3l (c'est à dire un module produisant ici du iodométhane par transformation de CO₂ ou de CH₄), un poste de collecte de déchets liquides 122, une zone de maintenance 123 de préférence à proximité des fenêtres d'accès et de sortie 112 et 116. Dans l'exemple représenté, une porte 124 d'accès à la salle est montée coulissante en sorte de bloquer l'accès aux fenêtres en configuration ouverte.

L'intérieur de la salle est maintenu en classe C, avec une dépression qui est, par exemple, idéalement entre -35 Pa à -45 Pa, mais la dépression peut être plus faible (-20MPa) ; la dépression peut être différente à l'intérieur des sas de transfert, par exemple +15 Pa et -25Pa.

Grâce à un tel dispositif et une telle installation, un radio-traceur est par exemple obtenu de la manière suivante :
- Une enceinte 10 d'un dispositif 1 est positionnée sur le poste de synthèse 114 par le robot de manipulation 60 ;
- La platine interne de connectique 17 du dispositif de synthèse est connectée avec la platine externe de connectique 20 du poste de synthèse 114 ;
- Une cassette de synthèse 30 du radio-traceur, préalablement fournie par un praticien via la fenêtre 112, est insérée dans l'enceinte 10 par le robot 60 ;
- Un radio-isotope acheminé depuis une source positionnée en dehors d'une salle 110 de l'installation 100 est injecté dans un module de synthèse de la cassette 30 ;
- Le radio-traceur est synthétisé dans un module de synthèse de la cassette 30 à partir du radio-isotope et de réactifs contenus dans la cassette 30 ; et
- Le radio-traceur est extrait hors du dispositif, voire mis en seringue si le praticien en a fourni une, par exemple grâce au module de mise en seringue.

Si nécessaire, le radio-traceur est dilué dans un produit injectable à l'homme, par exemple du sérum physiologique, par exemple avant d'être extrait ou mis en seringue.

La seringue est par exemple connectée en sortie de la platine externe de connectique 20 du poste de synthèse 114.

Enfin, La qualité du radio-traceur en sortie de la platine externe connectique 20 du poste de synthèse 114 est contrôlée par le module de contrôle qualité.

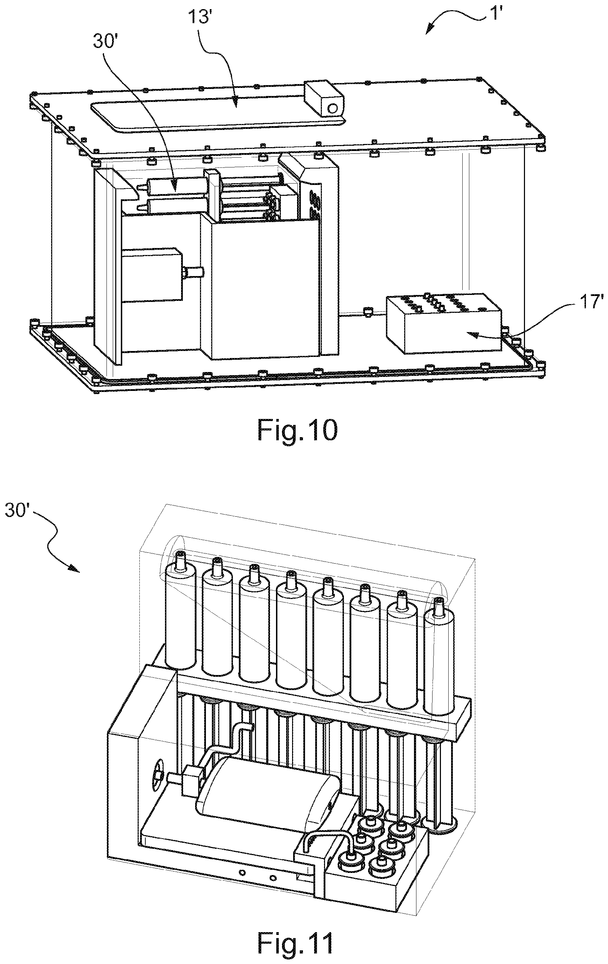

A titre d'exemples, les figures 10 et 11 présentent d'autres modes de réalisation d'un dispositif de synthèse 1' et d'une cassette de synthèse 30'.

Les éléments analogues à ceux précédemment décrits portent la même référence surmontée d'un signe « prime » et ne sont donc pas de nouveau décrits.

Cet exemple de réalisation diffère en particulier du précédent en ce que la trappe d'accès 13' est désormais formée par un portillon qui se rabat, et principalement en ce que la platine interne de connectique 17' est ici constituée de plusieurs parties, notamment ici de deux parties : une partie dite ici « verticale » sur laquelle est connectée la cassette 30' lorsque celle-ci est positionnée dans l'enceinte et une partie dite ici « horizontale », relativement fixe sur la paroi de l'enceinte, ici un fond de l'enceinte, comme précédemment.

Les différentes parties constituant la platine interne de connectique, ici les deux parties susmentionnées, sont reliées par différents câbles et/ou capillaires, non représentés ici par souci de clarté de la figure 10.

Ainsi, de manière générale, la platine interne de connectique comporte à minima une partie permettant une liaison entre la cassette à l'intérieur de l'enceinte et d'autres éléments à l'extérieur de l'enceinte (comme par exemple la platine externe de connectique ou autres).

Bien sûr, la présente invention ne se limite ni à la description précédente ni aux figures annexées, mais s'étend à toute variante à la portée de l'homme du métier.

Les différentes caractéristiques présentées peuvent être avantageusement combinées. Leur présence dans la description n'exclut pas, en effet, la possibilité de les combiner.

Les termes « comprenant » ou « comportant » sont à interpréter ici comme « incluant » au sens large et non de manière limitative, exclusive ou exhaustive.

## Revendications

1. Dispositif de synthèse (1) d'un radio-traceur à partir d'un radio-isotope **caractérisé en ce qu'**il comporte :
- Une enceinte (10) confinée universelle comportant une platine interne de connectique (17) et dans laquelle est ménagée une trappe d'accès (13) configurée pour y insérer une cassette de synthèse (30) spécifique du radio-traceur et l'en retirer,
- La cassette de synthèse (30) du radio-traceur, qui comporte des réactifs et un module de synthèse, le module de synthèse comportant une chambre de réaction et étant configuré pour recevoir les réactifs et le radio-isotope pour synthétiser le radio-traceur, le module de synthèse étant fluidiquement relié à une entrée de la cassette configurée pour acheminer le radio-isotope dans la chambre de réaction et à une sortie de la cassette configurée pour délivrer le radio-traceur hors de la cassette (30),
- La platine interne de connectique (17), comportant au moins une entrée, configurée pour raccorder l'entrée de la cassette à une arrivée du radio-isotope, et une sortie, configurée pour être raccordée à la sortie de la cassette et extraire le radio-traceur hors de l'enceinte.

2. Dispositif selon la revendication 1, **caractérisé en ce qu'**il comporte un tuyau d'aspiration de gaz (51), configuré pour pomper un gaz contenu dans l'enceinte (10) en partie supérieure du dispositif (1).

3. Dispositif selon la revendication 2, **caractérisé en ce que** le tuyau d'aspiration de gaz (51) est fluidiquement relié à la platine interne de connectique (17) du dispositif (1).

4. Dispositif selon l'une quelconque des revendications 1 à 3, **caractérisé en ce qu'**il comporte un tuyau d'injection de gaz propre (52), configuré pour amener du gaz propre dans l'enceinte (10) en partie inférieure du dispositif (1).

5. Dispositif selon la revendication 4, **caractérisé en ce que** le tuyau d'injection de gaz propre (52) est fluidiquement relié à la platine interne de connectique (17) du dispositif (1).

6. Dispositif selon l'une quelconque des revendications 1 à 5, **caractérisé en ce que** la cassette (30) comporte un module de prétraitement du radio-isotope.

7. Dispositif selon l'une quelconque des revendications 1 à 6, **caractérisé en ce qu'**il comporte un module de purification (43) du radio-traceur.

8. Dispositif selon la revendication 7, **caractérisé en ce que** le module de purification du radio-traceur (43) comporte une colonne HPLC.

9. Dispositif selon l'une quelconque des revendications 1 à 8, **caractérisé en ce qu'**il comporte un système externe de gestion de la qualité du gaz dans l'enceinte.

10. Dispositif selon la revendication 9, **caractérisé en ce que** le système de gestion de la qualité du gaz dans l'enceinte comporte une pompe configurée pour créer une dépression dans l'enceinte et un capteur de pression configuré pour contrôler la dépression.

11. Dispositif selon l'une quelconque des revendications 9 ou 10, **caractérisé en ce que** le système de gestion de la qualité du gaz dans l'enceinte comporte un contrôleur de débit en amont de l'enceinte et un contrôleur de débit en aval de l'enceinte configurés pour contrôler à la fois un débit de gaz qui traverse l'enceinte et une pression dans l'enceinte.

12. Dispositif selon l'une quelconque des revendications 9 à 11, **caractérisé en ce que** le système de gestion de la qualité du gaz dans l'enceinte comporte un filtre, par exemple de type H14, en amont et éventuellement en aval de l'enceinte, configuré pour assurer une pureté d'air de classe A.

13. Dispositif selon l'une quelconque des revendications 9 à 12, **caractérisé en ce que** le système de gestion de la qualité du gaz dans l'enceinte comporte une boucle de contrôle indépendante configurée pour réaliser un contrôle particulaire et éventuellement radiologique de l'air dans l'enceinte et **en ce que** la boucle de contrôle comporte un compteur particulaire configuré pour réaliser un pompage de la boucle.

14. Installation de synthèse (100) d'au moins un radio-traceur comportant un dispositif de synthèse (1) selon l'une quelconque des revendications 1 à 13 et une salle (110) confinée comportant :
- Une zone de stockage (113) d'au moins deux enceintes (10) de dispositif de synthèse (1), vides et identiques,
- Au moins une fenêtre de communication (112, 116) entre un intérieur et un extérieur de la salle (110) configurée pour qu'un praticien fournisse au moins une cassette de synthèse (30) du radio-traceur du dispositif de synthèse (1),
- Un robot de manipulation (60) configuré pour au moins prélever l'une des enceintes (10) et la cassette de synthèse (30), les amener sur un poste de synthèse (114) et les associer pour former le dispositif de synthèse (1) selon l'une quelconque des revendications 1 à 13,
- Le poste de synthèse (114), fixe dans la salle (110) et configuré pour recevoir le dispositif de synthèse (1), comportant une platine externe de connectique (20), configurée pour recevoir la platine interne (17) de l'enceinte (10) du dispositif de synthèse (1), comportant au moins une entrée configurée pour acheminer un radio-isotope dans la cassette de synthèse (30) et une sortie configurée pour y raccorder une seringue à remplir avec le radio-traceur, et
- Une arrivée de radio-isotope provenant d'une source située hors de la salle et connectée à l'entrée de la platine externe de connectique (20).

15. Installation selon la revendication 14, **caractérisé en ce que** la salle (110) comporte un module extérieur de contrôle de la qualité du radio-traceur synthétisé.

16. Installation selon la revendication 15, **caractérisée en ce que** le module de contrôle qualité est fluidiquement raccordé à la sortie de la platine externe de connectique (20) du poste de synthèse (114).

17. Installation selon l'une quelconque des revendications 14 à 16, **caractérisée en ce qu'**elle comporte un système de gestion d'air ambiant de la salle.

18. Procédé d'obtention d'un radio-traceur dans une installation (100) selon l'une quelconque des revendications 14 à 17 comportant les étapes suivantes :
- Une étape de positionnement d'une enceinte (10) de dispositif de synthèse (1) sur un poste de synthèse (114) de l'installation (100) par un robot de manipulation (60) ;
- Une étape de connexion d'une platine interne de connectique (17) de l'enceinte (10) du dispositif de synthèse (1) avec une platine externe de connectique (20) du poste de synthèse (114) ;
- Une étape d'insertion d'une cassette de synthèse (30) spécifique du radio-traceur dans l'enceinte (10) du dispositif de synthèse (1) par le robot (60), la cassette (30) étant préalablement fournie par un praticien via une fenêtre de l'installation (112), formant ainsi le dispositif de synthèse (1) de l'installation (100), le dispositif de synthèse (1) étant selon l'une quelconque des revendications 1 à 13 ;
- Une étape de fourniture d'un radio-isotope acheminé depuis une source positionnée en dehors d'une salle (110) de l'installation (100) jusque dans un module de synthèse de la cassette (30) ;
- Une étape de synthèse d'un radio-traceur dans le module de synthèse de la cassette (30) à partir du radio-isotope et de réactifs contenus dans la cassette (30) ; et
- Une étape d'extraction du radio-traceur hors du dispositif de synthèse (1).

19. Procédé selon la revendication 18, **caractérisé en ce qu'**il comporte en outre une étape de filtration stérilisante et de dilution/formulation du radio-traceur dans un produit injectable à l'homme.

20. Procédé selon l'une quelconque des revendications 18 ou 19, **caractérisé en ce qu'**il comporte en outre :
- Une étape de connexion d'une seringue en sortie de la platine externe de connectique (20) du poste de synthèse (114), et
- Une étape de mise en seringue du radio-traceur issu du dispositif (1).

21. Procédé selon l'une quelconque des revendications 18 à 20, **caractérisé en ce qu'**il comporte une étape de contrôle qualité du radio-traceur en sortie de la platine externe de connectique (20) du poste de synthèse (114) par un module de contrôle qualité situé à l'extérieur de la salle.

## Patentansprüche

1. Vorrichtung (1) zur Synthese eines Radiotracers ausgehend von einem Radioisotop, **dadurch gekennzeichnet, dass** sie enthält:
- ein geschlossenes Universalgehäuse (10), das eine interne Verbindungsplatte (17) enthält und in dem eine Zugangsklappe (13) ausgebildet ist, die dazu ausgelegt ist, eine spezifische Synthesekassette (30) zur Synthese des Radiotracers darin einzusetzen und herauszunehmen,
- die Synthesekassette (30) zur Synthese des Radiotracers, die Reagenzien und ein Synthesemodul enthält, wobei das Synthesemodul eine Reaktionskammer umfasst und dazu ausgelegt ist, die Reagenzien und das Radioisotop aufzunehmen, um den Radiotracer zu synthetisieren, wobei das Synthesemodul strömungstechnisch mit einem Einlass der Kassette verbunden ist, der dazu ausgelegt ist, das Radioisotop in die Reaktionskammer zu leiten, sowie mit einem Auslass der Kassette, der dazu ausgelegt ist, den Radiotracer aus der Kassette (30) freizugeben,
- wobei die interne Verbindungsplatte (17) zumindest einen Einlass aufweist, der dazu ausgelegt ist, den Einlass der Kassette mit einem Zulauf des Radioisotops zu verbinden, sowie einen Auslass, der dazu ausgelegt ist, mit dem Auslass der Kassette verbunden zu werden und den Radiotracer aus dem Gehäuse zu extrahieren.

2. Vorrichtung nach Anspruch 1, **dadurch gekennzeichnet, dass** sie einen Gasabsaugschlauch (51) enthält, der dazu ausgelegt ist, ein in dem Gehäuse (10) enthaltenes Gas im oberen Bereich der Vorrichtung (1) abzupumpen.

3. Vorrichtung nach Anspruch 2, **dadurch gekennzeichnet, dass** der Gasabsaugschlauch (51) strömungstechnisch mit der internen Verbindungsplatte (17) der Vorrichtung (1) verbunden ist.

4. Vorrichtung nach einem der Ansprüche 1 bis 3, **dadurch gekennzeichnet, dass** sie einen Reingaseinspritzschlauch (52) enthält, der dazu ausgelegt ist, Reingas in das Gehäuse (10) im unteren Bereich der Vorrichtung (1) zu leiten.

5. Vorrichtung nach Anspruch 4, **dadurch gekennzeichnet, dass** der Reingaseinspritzschlauch (52) strömungstechnisch mit der internen Verbindungsplatte (17) der Vorrichtung (1) verbunden ist.

6. Vorrichtung nach einem der Ansprüche 1 bis 5, **dadurch gekennzeichnet, dass** die Kassette (30) ein Modul zum Vorbehandeln des Radioisotops enthält.

7. Vorrichtung nach einem der Ansprüche 1 bis 6, **dadurch gekennzeichnet, dass** sie ein Reinigungsmodul (43) zum Reinigen des Radiotracers enthält.

8. Vorrichtung nach Anspruch 7, **dadurch gekennzeichnet, dass** das Reinigungsmodul (43) zum Reinigen des Radiotracers eine HPLC-Säule enthält.

9. Vorrichtung nach einem der Ansprüche 1 bis 8, **dadurch gekennzeichnet, dass** sie ein externes System zum Qualitätsmanagement von Gas in dem Gehäuse enthält.

10. Vorrichtung nach Anspruch 9, **dadurch gekennzeichnet, dass** das externe System zum Qualitätsmanagement von Gas in dem Gehäuse eine Pumpe enthält, die dazu ausgelegt ist, einen Unterdruck in dem Gehäuse zu erzeugen, sowie einen Drucksensor, der dazu ausgelegt ist, den Unterdruck zu regeln.

11. Vorrichtung nach einem der Ansprüche 9 oder 10, **dadurch gekennzeichnet, dass** das externe System zum Qualitätsmanagement von Gas in dem Gehäuse einen dem Gehäuse vorgelagerten Durchflussregler und einem dem Gehäuse nachgelagerten Durchflussregler enthält, die dazu ausgelegt sind, zugleich einen durch das Gehäuse strömenden Gasdurchfluss und einen Druck im Gehäuse zu regeln.

12. Vorrichtung nach einem der Ansprüche 9 bis 11, **dadurch gekennzeichnet, dass** das System zum Qualitätsmanagement von Gas in dem Gehäuse einen Filter vom Typ H14 stromaufwärts und gegebenenfalls stromabwärts des Gehäuses enthält, der dazu ausgelegt ist, eine Luftreinheit der Klasse A sicherzustellen.

13. Vorrichtung nach einem der Ansprüche 9 bis 12, **dadurch gekennzeichnet, dass** das System zum Qualitätsmanagement von Gas in dem Gehäuse eine unabhängige Kontrollschleife enthält, die dazu ausgelegt ist, eine Partikel- und gegebenenfalls radiologische Kontrolle der Luft in dem Gehäuse durchzuführen, und dass die Kontrollschleife einen Partikelzähler enthält, der dazu ausgelegt ist, ein Abpumpen der Schleife durchzuführen.

14. Anlage (100) zur Synthese zumindest eines Radiotracers mit einer Synthesevorrichtung (1) nach einem der Ansprüche 1 bis 13 und einem geschlossenen Raum (110), enthaltend:
- einen Lagerbereich (113) zum Lagern von zumindest zwei Gehäusen (10) der Synthesevorrichtung (1), die leer und identisch ausgeführt sind,
- zumindest ein Kommunikationsfenster (112, 116) zwischen einem Innenbereich und einem Außenbereich des geschlossenen Raums (110), das dazu ausgelegt ist, damit ein Anwender zumindest eine Synthesekassette (30) zur Synthese des Radiotracers der Synthesevorrichtung (1) bereitstellt,
- einen Handhabungsroboter (60), der dazu ausgelegt ist, um zumindest eines der Gehäuse (10) und die Synthesekassette (30) zu entnehmen, sie einer Synthesestation (114) zuzuführen und sie zusammenzufügen, um die Synthesevorrichtung (1) nach einem der Ansprüche 1 bis 13 zu bilden,
- die Synthesestation (14), die fest im Raum (110) angeordnet und dazu ausgelegt ist, die Synthesevorrichtung (1) aufzunehmen und eine externe Verbindungsplatte (20) enthält, die dazu ausgelegt ist, die interne Platte (17) des Gehäuses (10) der Synthesevorrichtung (1) aufzunehmen, enthaltend zumindest einen Einlass, der dazu ausgelegt ist, ein Radioisotop in die Synthesekasse (30) zu leiten, sowie einen Auslass, der dazu ausgelegt ist, um eine mit dem Radiotracer zu befüllende Spritze daran anzuschließen, und
- einen Zulauf für das Radioisotop, das von einer Quelle stammt, die außerhalb des Raums liegt und mit dem Einlass der externen Verbindungsplatte (20) verbunden ist.

15. Anlage nach Anspruch 14, **dadurch gekennzeichnet, dass** der Raum (110) ein äußeres Modul zum Qualitätsmanagement des synthetisierten Radiotracers enthält.

16. Anlage nach Anspruch 15, **dadurch gekennzeichnet, dass** das Modul zum Qualitätsmanagement strömungstechnisch mit dem Auslass der externen Verbindungsplatte (20) der Synthesestation (114) verbunden ist.

17. Anlage nach einem der Ansprüche 14 bis 16, **dadurch gekennzeichnet, dass** sie ein Luftmanagementsystem für die Umgebungsluft des Raums enthält.

18. Verfahren zum Gewinnen eines Radiotracers in einer Anlage (100) nach einem der Ansprüche 14 bis 17, umfassend die nachstehenden Schritte:
- einen Schritt des Positionierens von einem Gehäuse (10) einer Synthesevorrichtung (1) an einer Synthesestation (114) der Anlage (100) mittels eines Handhabungsroboters (60);
- einen Schritt des Verbindens einer internen Verbindungsplatte (17) des Gehäuses (10) der Synthesevorrichtung (1) mit einer externen Verbindungsplatte (20) der Synthesestation (114);
- einen Schritt des Einsetzens einer spezifischen Synthesekassette (30) zur Synthese des Radiotracers in das Gehäuse (10) der Synthesevorrichtung (1) mittels des Roboters (60), wobei die Kassette (30) zuvor von einem Anwender durch ein Fenster der Anlage (112) bereitgestellt wird, wodurch so die Synthesevorrichtung (1) der Anlage (100) gebildet wird, wobei die Synthesevorrichtung (1) nach einem der Ansprüche 1 bis 13 ausgeführt ist;
- einen Schritt des Bereitstellens von einem Radioisotop, das von einer außerhalb eines Raums (110) der Anlage (100) positionierten Quelle zu einem Synthesemodul der Kassette (30) geleitet wird;
- einen Schritt der Synthese eines Radiotracers in dem Synthesemodul der Kassette (30) ausgehend von dem Radioisotop und Reagenzien, die in der Kassette (30) enthalten sind; und
- einen Schritt des Extrahierens des Radiotracers aus der Synthesevorrichtung (1).

19. Verfahren nach Anspruch 18, **dadurch gekennzeichnet, dass** es ferner einen Schritt der sterilisierenden Filtration und Verdünnung/Formulierung des Radiotracers zu einem für Menschen injizierbaren Mittel umfasst.

20. Verfahren nach einem der Ansprüche 18 oder 19, **dadurch gekennzeichnet, dass** es ferner umfasst:
- einen Schritt des Anschließens einer Spritze am Auslass der externen Verbindungsplatte (20) der Synthesestation (114), und
- einen Schritt des Einbringens des von der Vorrichtung (1) stammenden Radiotracers in eine Spritze.

21. Verfahren nach einem der Ansprüche 18 bis 20, **dadurch gekennzeichnet, dass** es ferner einen Schritt des Qualitätsmanagements des Radiotracers am Auslass der externen Verbindungsplatte (20) der Synthesestation (114) durch ein Qualitätsmanagementmodul, das sich außerhalb des Raums befindet, umfasst.

## Claims

1. A device (1) for synthesizing a radioactive tracer from a radioisotope **characterized in that** it comprises:
- A universal confined chamber (10) comprising an internal connector plate (17) and in which is provided an access door (13) configured for insertion therein of a cassette (30) for specific synthesis of the radioactive tracer and for its removal therefrom,
- The cassette (30) for synthesis of the radioactive tracer, which comprises reagents and a synthesis module, the synthesis module comprising a reaction cell and being configured to receive the reagents and the radioisotope for synthesizing the radioactive tracer, the synthesis module being fluidically connected to an entry of the cassette that is configured for conveying the radioisotope into the reaction cell and an exit from the cassette configured for delivering the radioactive tracer out of the cassette (30),
- The internal connector plate (17), comprising at least one entry, configured to connect the entry of the cassette to an ingress of the radioisotope, and an exit, configured to be connected to the exit of the cassette and to extract the radioactive tracer from the chamber.

2. A device according to claim 1, **characterized in that** it comprises a gas suction pipe (51), configured to pump out a gas contained in the chamber (10) in the upper part of the device (1).

3. A device according to claim 2, **characterized in that** the gas suction pipe (51) is fluidically connected to the internal connector plate (17) of the device (1).

4. A device according to any one of claims 1 to 3, **characterized in that** it comprises a clean gas injection pipe (52), configured to bring clean gas into the chamber (10) in the lower part of the device (1).

5. A device according to claim 4, **characterized in that** the clean gas injection pipe (52) is fluidically connected to the internal connector plate (17) of the device (1).

6. A device according to any one of claims 1 to 5, **characterized in that** the cassette (30) comprises a module for pre-treatment of the radioisotope.

7. A device according to any one of claims 1 to 6, **characterized in that** it comprises a radioactive tracer purification module (43).

8. A device according to claim 7, **characterized in that** the radioactive tracer purification module (43) comprises an HPLC column.

9. A device according to any one of claims 1 to 8, **characterized in that** it comprises an external system for managing the quality of the gas in the chamber.

10. A device according to claim 9, **characterized in that** the system for managing the quality of the gas in the chamber comprises a pump configured to create a pressure reduction in the chamber and a pressure sensor configured to measure the pressure reduction.

11. A device according to any one of claims 9 or 10, **characterized in that** the system for managing the quality of the gas in the chamber comprises a flow rate measuring device upstream of the chamber and a flow rate measuring device downstream of the chamber which are configured to measure both a flow rate of gas which passes through the chamber and a pressure in the chamber.

12. A device according to any one of claims 9 to 11, **characterized in that** the system for managing the quality of the gas in the chamber comprises a filter, for example of H14 type, upstream and possibly downstream of the chamber, configured to ensure Class A air purity.

13. A device according to any one of claims 9 to 12, **characterized in that** the system for managing the quality of the gas in the chamber comprises an independent measurement loop configured to perform a particular, possibly radiological, measurement of the air in the chamber and **in that** the measurement loop comprises a particular counter configured to perform pumping out of the loop.

14. An installation (100) for synthesis of at least one radioactive tracer comprising a synthesis device (1) according to any one of claims 1 to 13 and a confined room (110) comprising:
- An area (113) for storage of at least two chambers (10) of synthesis devices (1), which are empty and identical,
- At least one window (112, 116) for communication between an inside and an outside of the room (110) configured for a practitioner to supply at least one cassette (30) for synthesis of the radioactive tracer of the synthesis device (1),
- A manipulation robot (60) configured at least to sample one of the chambers (10) and the synthesis cassette (30), bring them onto a synthesis station (114) and associate them to form the synthesis device (1) according to any one of claims 1 to 13,
- The synthesis station (114), fixed in the room (110) and configured to receive the synthesis device (1), comprising an external connector plate (20), that is configured to receive the internal plate (17) of the chamber (10) of the synthesis device (1), comprising at least one entry configured to convey a radioisotope into the synthesis cassette (30) and an exit configured to connect thereto a syringe to fill with the radioactive tracer, and
- An ingress of radioisotope coming from a source situated outside the room and connected to the entry of the external connector plate (20).

15. An installation according to claim 14, **characterized in that** the room (110) comprises an external module for quality control of the synthesized radioactive tracer.

16. An installation according to claim 15, **characterized in that** the quality control module is fluidically connected to the exit of the external connector plate (20) of the synthesis station (114).

17. An installation according to any one of claims 14 to 16, **characterized in that** it comprises a system for managing ambient air of the room.

18. A method for obtaining a radioactive tracer in an installation (100) according to any one of claims 14 to 17 comprising the following steps:
- A step of positioning a chamber (10) of a synthesis device (1) on a synthesis station (114) of the installation (100) by a manipulation robot (60);
- A step of connecting an internal connector plate (17) of the chamber (10) of the synthesis device (1) with an external connector plate (20) of the synthesis station (114);
- A step of inserting a cassette (30) for specific synthesis of the radioactive tracer into the chamber (10) of the synthesis device (1) by the robot (60), the cassette (30) being supplied in advance by a practitioner via a window of the installation (112), thus forming the synthesis device (1) of the installation (100), the synthesis device (1) being according to any one of claims 1 to 13;
- A step of providing a radioisotope conveyed from a source positioned outside a room (110) of the installation (100) into a synthesis module of the cassette (30);
- A step of synthesizing a radioactive tracer in the synthesis module of the cassette (30) from the radioisotope and from reagents contained in the cassette (30); and
- A step of extracting the radioactive tracer from the synthesis device (1).

19. A method according to claim 18, **characterized in that** it further comprises a step of sterilizing filtration and/or dilution/formulation of the radioactive tracer into a product injectable into humans.

20. A method according to any one of claims 18 or 19, **characterized in that** it further comprises:
- A step of connecting a syringe to the exit of the external connector plate (20) of the synthesis station (114), and
- A step of placing the radioactive tracer from the device (1) into a syringe.

21. A method according to any one of claims 18 to 20, **characterized in that** it comprises a step of quality control of the radioactive tracer at the exit from the external connector plate (20) of the synthesis station (114) by a quality control module situated outside the room.
